# EUROPEAN PATENT APPLICATION

(11) **EP 2 544 088 A1**
(43) Date of publication of application: **09.01.2013**
(21) Application number: 12174597.0
(22) Date of filing: 02.07.2012
(51) Int. Cl.: G06F 9/44, G06F 11/36

(54) **Development support apparatus and development support program**

(30) Priority: 04.07.2011 JP 2011148215
(71) Applicant: OMRON CORPORATION, Kyoto-shi, Kyoto 600-8530 (JP)
(72) Inventor: Komatsu, Yukihiro, Kyoto, Kyoto 600-8530 (JP); Ijiri, Takashi, Kyoto, Kyoto 600-8530 (JP); Sawa, Shinya, Kyoto, Kyoto 600-8530 (JP); Nakaoka, Shohei, Kyoto, Kyoto 600-8530 (JP)
(74) Representative: Horn Kleimann Waitzhofer

(57) **Abstract**

There are provided a development support apparatus and a development support program capable of facilitating development of a program executed by an image processing apparatus. A user selects a desired purpose from a displayed list including purposes of processing. Accordingly, an explanatory screen of a sample unit corresponding to the purpose is displayed. When a link of a folder saving a program of the sample unit is selected, the directory including the folder is displayed. When the image of the folder is dropped onto a screen displayed during an initial operation, the sample unit is executed. The sample unit includes one or more image processing modules (processing units). When the sample unit is executed, processing defined by each processing unit is executed on image data stored as a default, and a result thereof is displayed on a monitor.

## Description

### BACKGROUND OF THE INVENTION

### TECHNICAL FIELD

The present invention relates to a development support apparatus and a development support program, and more particularly, to development of a program executed by an image processing apparatus in a system including the image processing apparatus for performing inspection and determination by performing image processing on an image of a measurement target object.

### RELATED ART

In the past, when a program executed by an image processing apparatus is developed, an object program, an image processing module, and the like, which are constituent units of the contents of processing, are prepared in advance and used. Along with the increase in variety of object measurement modes by the image processing apparatus, more flexible customization is desired in development of the program.

With regard to this point, for example, Patent Document 1 (Japanese Unexamined Patent Publication No. 2009-59203) discloses a technique in which a new image processing module generated according to a user operation is added and stored in a storage unit storing multiple image processing modules, and an execution sequence of multiple image processing modules out of the image processing modules stored in the storage unit is determined according to a user operation whereby a basic flow is generated.

Patent Document 2 (Japanese Unexamined Patent Publication No. 2009-87144) discloses a technique in which multiple image processing modules stored in a storage unit include a first image processing module for specifying an image processing function and a second image processing module as information for displaying a screen used for input of setting information to the first image processing module, and on the basis of information which is input to the displayed screen according to the second image processing module, the image processing function is customized by setting an image processing operation for the first image processing module.

### RELATED ART DOCUMENTS

### PATENT DOCUMENTS

Patent Document 1 Japanese Unexamined Patent Publication No. 2009-59203
Patent Document 2 Japanese Unexamined Patent Publication No. 2009-87144

### OVERVIEW OF THE INVENTION

### PROBLEM TO BE SOLVED BY THE INVENTION

According to the technique of the related art explained above, when the image processing function is customized in accordance with the technique described in Patent Document 2 and only a necessary image processing module is generated by using the image processing module used in advance in accordance with the technique described in Patent Document 1, a desired basic flow can be generated.

However, a source code describing the contents of each processing needs to be generated in order to generate the image processing module as disclosed in Patent Document 1. Therefore, there is a problem that a heavy burden is imposed on a system integrator (SI). On the other hand, when a manufacturer of an image processing apparatus develops a program according to each client's demand, there is a problem that it is impossible to make ends meet in terms of the cost.

The present invention is made in view of such circumstances, and it is an object of the present invention to provide a development support apparatus and a development support program capable of facilitating development of a program executed by an image processing apparatus.

### PROBLEM TO BE SOLVED BY THE INVENTION

In accordance with one aspect of the present invention, a development support apparatus includes a storage part for storing a particular program achieving particular image processing; a reception part for receiving an operation from outside; and an execution part for executing the particular program in response to the reception part receiving a particular operation; wherein the storage part stores screen display data for displaying a listing of the particular program on a screen, and in response to the reception part receiving the particular operation, the execution part further displays the listing of the particular program, using the screen display data.

Preferably, the storage part further stores explanatory data for displaying an explanation about the particular program on the screen, and in response to the particular operation, the execution part further displays the explanation about the particular program, using the explanatory data.

Preferably, the particular operation includes a first operation for displaying the listing and the explanation, and a second operation for executing the particular program.

Preferably, the execution part receives a change of settings of the particular program, and stores the change in the storage part.

In accordance with another aspect of the present invention, a development support program is executed by a computer having a storage part for storing a particular program achieving particular image processing, the storage part stores screen display data for displaying a listing of the particular program on a screen, and the development support program causes the computer to execute the steps of receiving an operation from outside, displaying the listing of the particular program, using the screen display data in response to receiving the particular operation, and executing the particular program.

### EFFECT OF THE INVENTION

According to the present invention, a particular program is executed, and a listing of the particular program is displayed.

Therefore, a user can recognize not only the processing contents of the particular program but also the the listing of the program achieving the processing contents.

### BRIEF DESCRIPTION OF THE DRAWINGS

FIG. 1 is a view illustrating an example of a set-up of an image processing apparatus to which the present invention is applied;
FIG. 2 is a view illustrating an overview of an external configuration of the image processing apparatus;
FIG. 3 is a view illustrating an electrical configuration of the image processing apparatus;
FIG. 4 is a view illustrating a main screen of the image processing apparatus according to the present embodiment;
FIG. 5 is a view illustrating a flow edit dialogue screen of the image processing apparatus according to the present embodiment;
FIG. 6 is a view illustrating a modification of the main screen of FIG. 4;
FIG. 7 is a view illustrating a functional configuration of a controller of FIG. 3;
FIG. 8 is a view schematically illustrating a configuration of information stored in a flash memory of FIG. 3;
FIG. 9 is a view schematically illustrating an example of a configuration of sample data;
FIG. 10 is a view schematically illustrating an example of a configuration of setting data;
FIG. 11 is a view illustrating an example of screen display on a monitor of FIG. 1;
FIG. 12 is a view illustrating another example of the screen display on the monitor of FIG. 1;
FIG. 13 is a view illustrating an example of an explanatory screen displayed on the monitor of FIG. 1;
FIG. 14 is a view illustrating an example of the explanatory screen displayed on the monitor of FIG. 1;
FIG. 15 is a view illustrating an example of the explanatory screen displayed on the monitor of FIG. 1;
FIG. 16 is a view illustrating an example of a screen displaying contents of a directory within a flash memory of the image processing apparatus being illustrated;
FIG. 17 is a view illustrating still another example of the screen display on the monitor of FIG. 1;
FIG. 18 is a view illustrating a modification of a list displayed in development support processing;
FIG. 19 is a view illustrating another example of the explanatory screen displayed on the monitor of FIG. 1;
FIG. 20 is a view illustrating another example of the explanatory screen displayed on the monitor of FIG. 1;
FIG. 21 is a view illustrating another example of the screen display on the monitor of FIG. 1;
FIG. 22 is a view illustrating still another example of the screen display on the monitor of FIG. 1; and
FIG. 23 is a flowchart of development support processing executed by a controller.

### EMBODIMENTS OF THE INVENTION

Hereinafter, an embodiment of an inspection apparatus according to the present invention will be explained with reference to drawings. In each drawing, the same constituent elements are denoted with the same reference signs, and are not detailed repeatedly.

### (1) Configuration of image processing apparatus

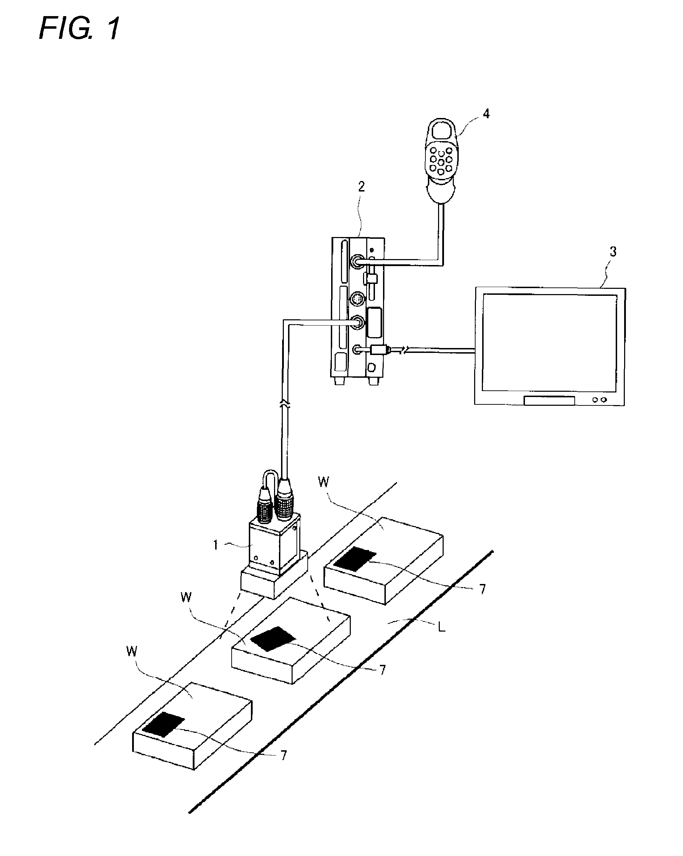

FIG. 1 illustrates an example of a set-up of an image processing apparatus to which the present invention is applied.

The image processing apparatus according to the present embodiment includes a camera 1, a controller 2, a monitor 3, a console 4, and the like. In an inspection line L of a factory, the image processing apparatus takes pictures of conveyed workpieces W in order and generates color images thereof. By processing the images, the image processing apparatus determines whether a position, a posture, a size, and the like of a measurement target object 7 (mark, character, fault, and the like) on each of the workpieces W are accepted or rejected. It should be noted that the form of the console 4 is not particularly limited, as long as it is a device which an operator can use to give an instruction to a CPU (Central Processing Unit) 21, such as a mouse, a keyboard, or a touch panel. Instead of using only one camera 1, multiple cameras 1 may be connected.

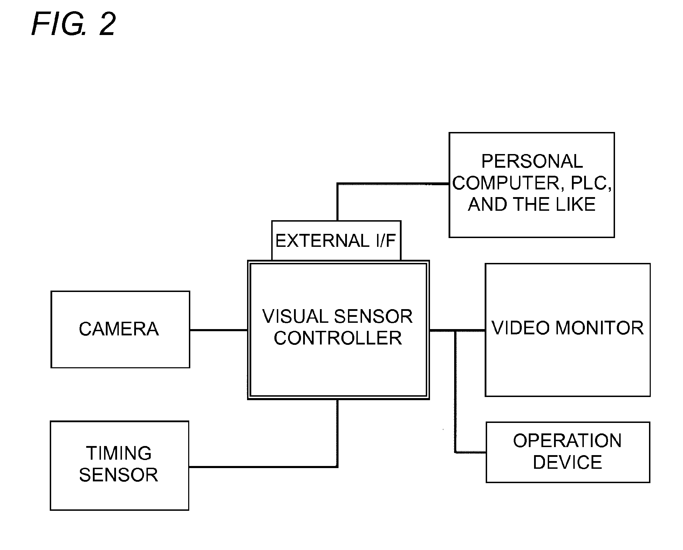

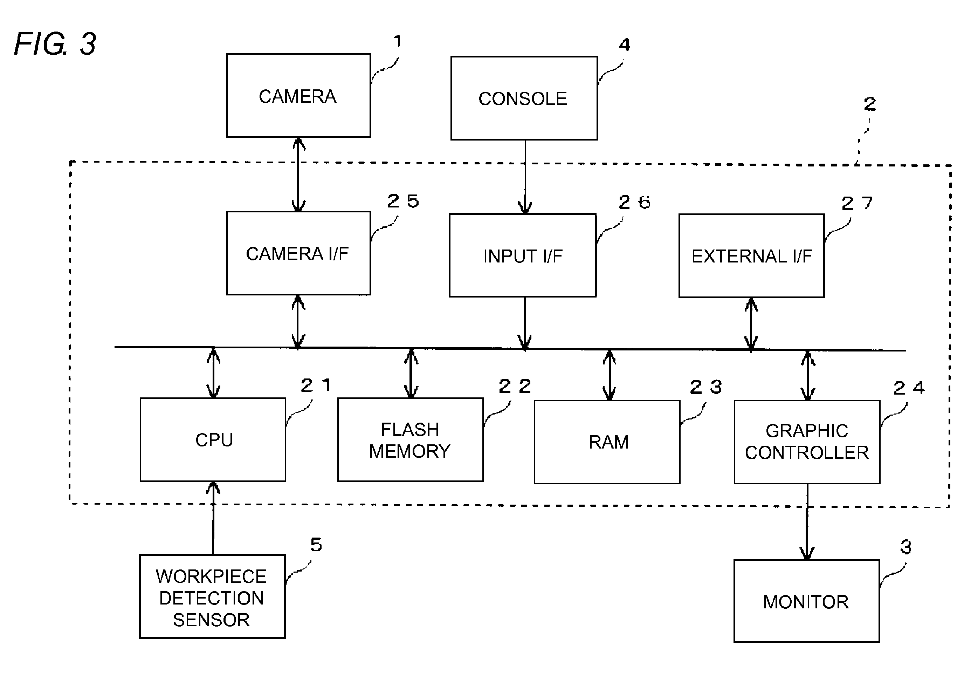

FIG. 2 illustrates an overview of an external configuration of the image processing apparatus. FIG. 3 illustrates an electrical configuration of the image processing apparatus.

The controller 2 is an example of a development support apparatus according to the present embodiment. The controller 2, with the CPU 21 being a main object of control, includes a flash memory 22, a RAM (Random Access Memory) 23, a graphic controller 24, a camera interface 25, an input interface 26, an external interface 27, and the like.

The flash memory 22 stores, e.g., programs and parameters required for processing, and the RAM 23 temporarily stores image data, intermediate operation results, and the like.

The programs executed by the CPU 21 to achieve functions stated in the present embodiment may be stored in the flash memory 22, or may be recorded in a storage medium which is detachably attached to the image processing apparatus. Examples of the storage medium include media storing programs in a non volatile manner, such as a CD-ROM (Compact Disc - Read Only Memory), a DVD-ROM (Digital Versatile Disk - Read Only Memory), a USB (Universal Serial Bus) memory, a memory card, a FD (Flexible Disk), a hard disk, a magnetic tape, a cassette tape, an MO (Magnetic Optical Disc), an MD (Mini Disc), an IC (Integrated Circuit) card (excluding the memory card), an optical card, a mask ROM, an EPROM, and an EEPROM (Electronically Erasable Programmable Read-Only Memory).

The camera interface 25 includes, e.g., a driving circuit of the camera 1, a buffer for receiving respective image signals of R, G, B, and an A/D conversion circuit (all of which are not shown). The input interface 26 is provided to receive a signal from the console 4. The external interface 27 is used to communicate with an external device (personal computer, PLC, or the like) not shown. The graphic controller 24 executes display control on the monitor.

The external I/F (interface) is connected to a PLC (Power Line Communication) and a personal computer, and this also allows connection with another image processing apparatus via a network.

The CPU 21 displays, on the monitor 3, the programs and the parameters stored in the flash memory 22 and the RAM 23, and the CPU 21 stores data, which is input from the console 4 and the external I/F 27, in the flash memory 22 and the RAM 23. In addition, a workpiece detection sensor 5 (a photoelectric switch, a proximity switch, or the like) is connected thereto. When the CPU 21 receives from this sensor 5 a signal indicating a workpiece W has been detected, the CPU 21 drives the camera 1 using the camera interface 25, and causes the camera 1 to take a picture of the workpiece W. Then, when a color gray-scale image (hereinafter referred to as "processing target image") of the workpiece W is generated and saved in the RAM 23, the CPU 21 executes, on the basis of the programs stored in the flash memory 22, processing of extracting the measurement target object 7 and processing of measuring the extracted measurement target object 7, and further, the CPU 21 determines whether the measurement target object is acceptable or rejected on the basis of the measurement result. The image as the processing result (hereinafter referred to as "processed image") and data of the measuring processing result are stored in the flash memory 22 and the RAM 23. Furthermore, the CPU 21 can obtain an image of another image processing apparatus connected via the network by way of the external I/F 27. Moreover, the CPU 21 can perform processing of transmitting the programs, parameters, and the like to another image processing apparatus from this image processing apparatus.

The controller 2 illustrated in FIGS. 1 to 3 is a device solely developed for image processing. However, the controller is not limited thereto. For example, a personal computer to which an image processing program is installed may be used. In this case, the program is provided to the personal computer via a storage medium such as a CD-ROM or a communication line.

### (2) Screen display of image processing apparatus

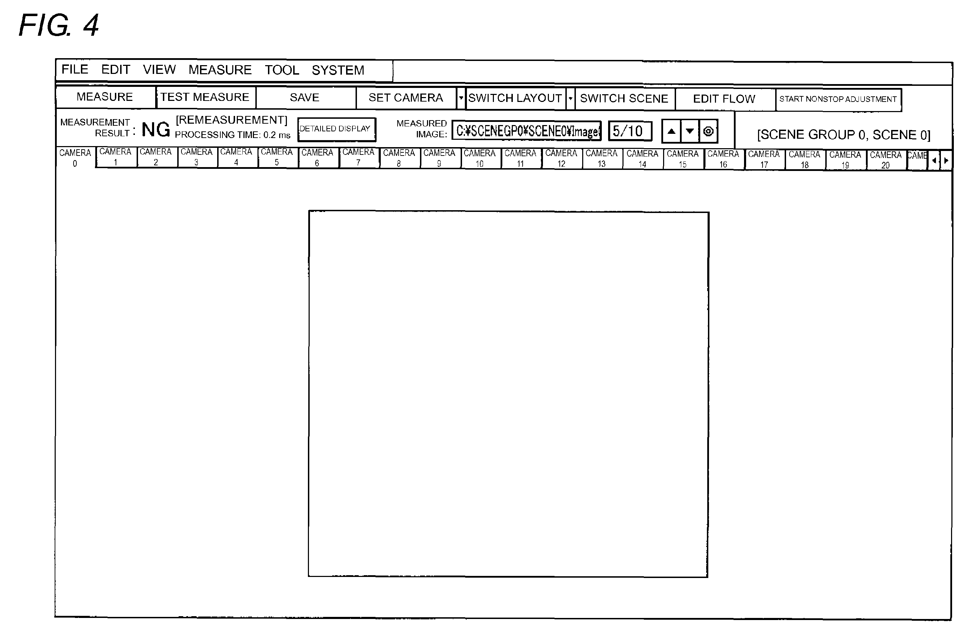

FIG. 4 shows a main screen of the image processing apparatus according to the present embodiment. At the top, a system menu area is displayed. In the system menu area, system menus such as "File", "Edit", "View", "Measure", "Tool", and "System" are shown. Below the system menu, a tool bar area is displayed. In the tool bar area, tasks frequently performed in this image processing apparatus are displayed as a tool bar. Below the tool bar area, a measurement information display area is displayed. In the measurement information display area, information on the measurement result, the measurement target, remeasurement, and display switching is displayed. Below these areas, a layout switch area is displayed. In the layout switch area, display is switched according to layout switch setting to be explained later in detail.

When "File" in the system menu area is selected by the console 4 or the like, "save", "change history", and "scene switching" are displayed as lower level selection menus. When "save" is chosen, save processing is performed to save various kinds of setting data having been set. When "change history" is chosen, a change history dialogue is displayed, and the setting is loaded with the selected history. The change history dialogue displays, in a list format, setting changes (saved date/time, saved data type/classification, and saved data file name) saved as a history in the past. Shown as the saved data is a number or a name of a flow (scene data) generated by selecting processing items from among multiple image processing items prepared in advance and combining them in a predetermined sequence, for the inspection or determination to be performed. When "scene switching" is selected, a screen for receiving input of the name or the number of the scene data or a group (scene group) to which the scene data belong is displayed, and the scene data in the scene group which is input / selected with text input or in a dropdown list is switched as a target of operation such as editing or execution.

When "Edit" in the system menu area is selected by means of the console 4 or the like, "edit flow", "start/end non-stop adjustment", editing of other processing items, items for performing property setting are displayed as lower level selection menus thereof.

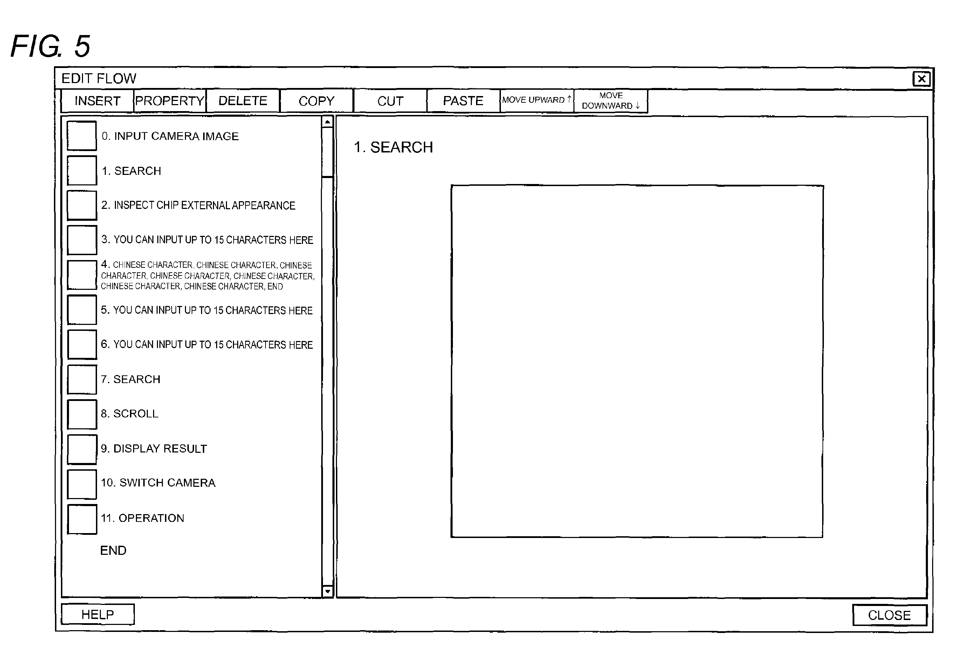

When "edit flow" is selected, an edit flow dialogue screen is displayed (FIG. 5). It is a screen for editing a scene which is selected and displayed on the main screen. In the upper portion of the window, "edit flow" is displayed as a title, and a tool button area is provided blow "edit flow". In the tool button area, functions required for the edit flow are displayed as buttons. At the left side below the tool button area, a flow area is provided to display a flow of an edit target in a list format, and a camera image display area is provided at the right side thereof.
At the left side of the lowermost portion, a help button is provided. When the help button is selected, a screen of an operation manual is displayed. At the right side of the lowermost portion, a close button is provided. When the close button is selected, parameters which have been set are given to the main screen, and the screen is closed. The buttons provided in the tool button area include "insert" for inserting a processing unit (image processing module), "property" for setting the property of the processing unit, "delete" for deleting the processing unit, "copy" for copying the processing unit, "cut" for cutting the processing unit, "paste" for pasting the processing unit (when the copy/cut button is not enabled, this functions as a disable button), "move (upward)" for moving upward the position of the processing unit, and "move (downward)" for moving downward the position of the processing unit. In the flow area, images (icons) corresponding to processing items set to the processing unit are displayed as processing unit icons (FIG. 5 displays rectangular boxes arranged in the vertical direction at the left end of the flow area), and when one of the icons is selected, the property of the selected processing unit can be displayed and set. At the right side of each of the icons, a serial number of the processing unit and the name of the processing unit are displayed. At the end of the flow, an end marker is displayed to allow cursor selection.

The controller 2 edits, in accordance with input by means of the console 4, the contents of setting of each processing unit included in the flow displayed on the screen as illustrated in FIG. 5.

When the editing of the flow is completed, the controller 2 causes the monitor 3 to display the main screen as illustrated in FIG. 4, which allows an image processing operation.

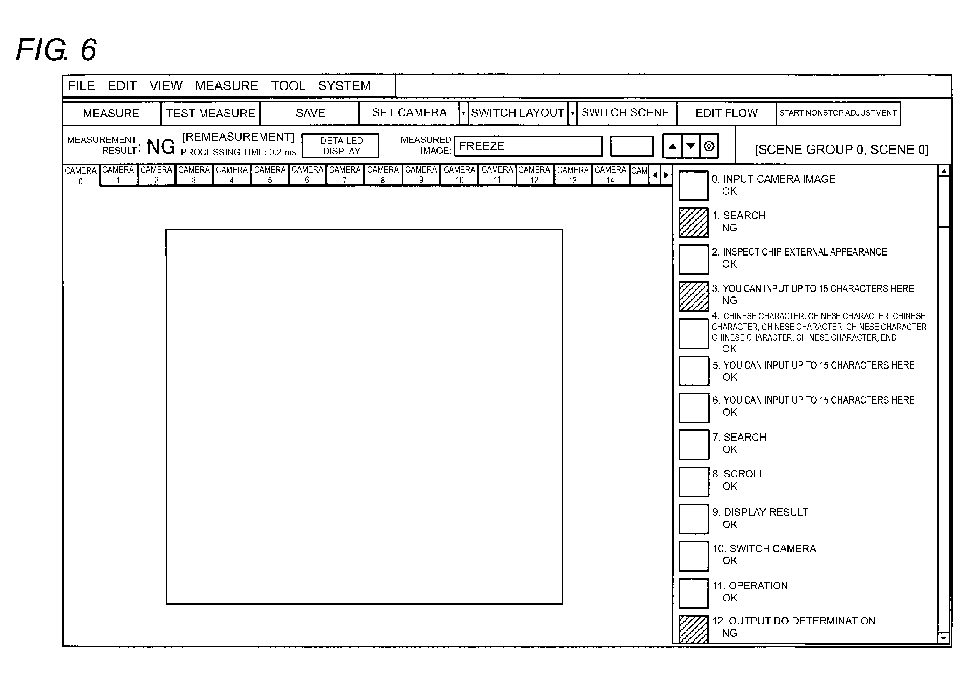

When the flow is edited, the layout of the screen can also be changed. FIG. 6 shows a modification of the layout on the main screen.

In FIG. 6, a camera image display area is set at the left side of the layout switch area, and a flow display area is set at the right side thereof. In the flow display area, the processing flow of the measurement target is displayed in a list format. An icon is provided for each processing unit, which serves as a button, and when the button is pressed down, the property of the processing item corresponding to the processing unit can be set. When measurement is performed, measurement results (OK/NG) are displayed for the respective processing units. At least one of "icon" and "measurement result" of a processing unit which is determined to be NG (not good) is displayed in a format different from that of the other processing units. In FIG. 6, the icons are displayed with hatching.

In FIG. 6, each processing unit region is selectable, and when one of the regions is selected, an image in a "camera image display" area is displayed in synchronization. In a case where one image is displayed, an image tab corresponding to the processing unit selected in the flow is selected and displayed. In a case where multiple images are displayed, a page including an image corresponding to the processing unit selected in the flow is displayed. However, when an image to be displayed is selected according to a layout setting, only the selected processing unit is to be displayed. In a processing unit which is not selected as a display target, the color indicating the display state at the left side of the icon in the flow display area is changed to a non-display state. When the image processing apparatus is activated, "0. input camera image" is being selected. However, when the layout is switched, the selection state of the processing unit remains unchanged.

### (3) Functional configuration of image processing apparatus

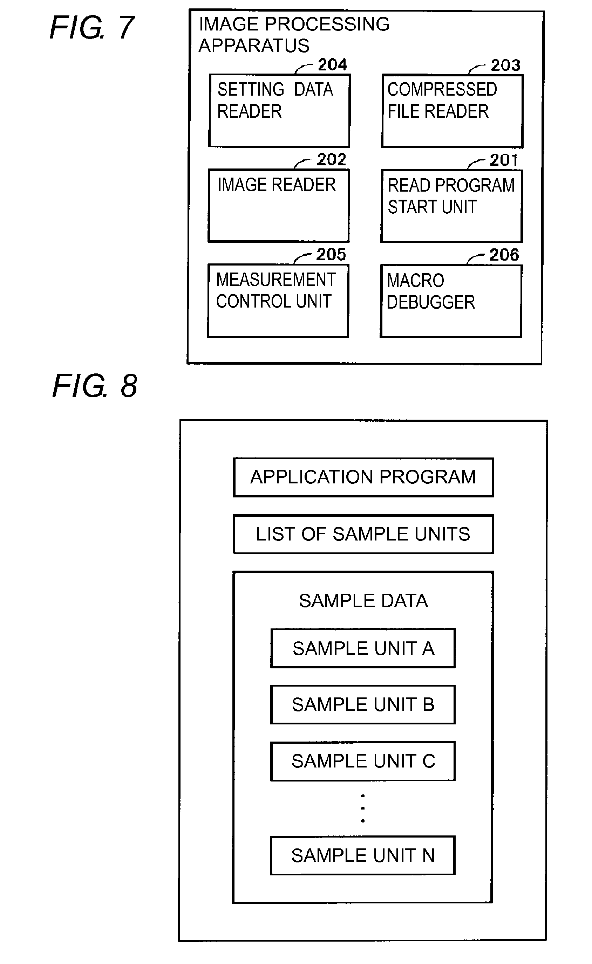

FIG. 7 is a view illustrating the functional configuration of the controller 2.

As shown in FIG. 7, the controller 2 includes a read program start unit 201, an image reader 202, a compressed file reader 203, a setting data reader 204, a measurement control unit 205, and a macro debugger 206. For example, each function is achieved when the CPU 21 executes a program stored in the flash memory 22.

FIG. 8 is a view schematically illustrating a configuration of a portion, in the information stored in the flash memory 22, related to the functions of the image processing apparatus explained in the present embodiment.

As shown in FIG. 8, the information stored in the flash memory 22 includes an application program, a list of sample units, and sample data.

The application program is a program of program development support application executed by the controller 2 (which may be hereinafter simply referred to as "development support application"). The list of sample units includes display data for displaying the list of the "sample units". The development support application according to the present embodiment is an application used for executing the sample units achieving the functions same as those of the units executed by the image processing apparatus, in a format of demonstration. In the development support application, the list of sample units is displayed, and one of the sample units selected from the list is executed. The sample data is used for executing the sample units. The sample data is provided as pieces A to N respectively for the sample units. Alternatively, the multiple sample units may share part of the sample data.

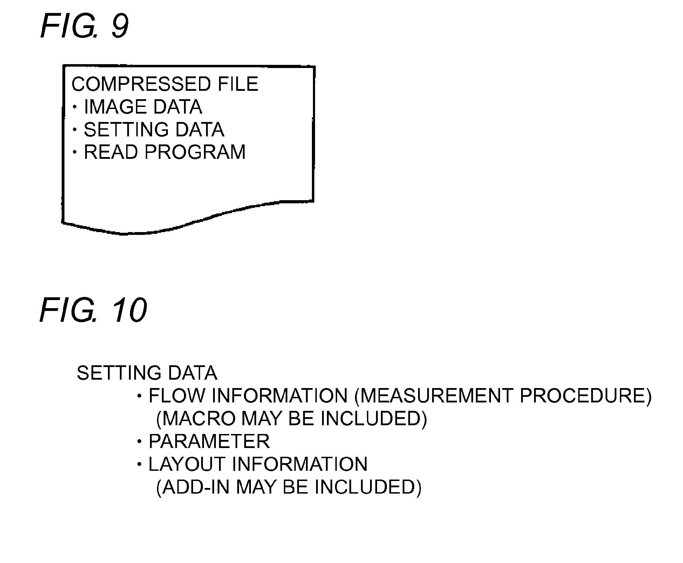

FIG. 9 is a view schematically illustrating an example of a configuration of the sample data.
In the present embodiment, each piece of the sample data is stored in the flash memory 22 in a format of a compressed file. Each piece of the sample data includes image data, setting data, and a program to be read.

The image data is used as a target of an image processing operation executed as demonstration when each piece of the sample data is executed.

The setting data is used for executing the sample units. FIG. 10 is a view schematically illustrating an example of a configuration of the setting data.

As shown in FIG. 10, the setting data includes flow information, parameters, and layout information. The flow information is a processing procedure (program) for achieving an image processing module included in the sample unit (which may be hereinafter referred to as "processing unit" if applicable). The flow information may be a program, or may be a macro. The parameter is a default value of a parameter when the processing procedure according to the above flow information is executed. The layout information is used for identifying a default layout of an element displayed on a measurement screen as illustrated in FIGS. 4 and 6. The layout information may have an add-on introduced therein.

Referring back to FIG. 9, the program to be read is used for activating each of the sample units.

### (4) Development support processing

Hereinafter, the development support processing executed by the controller 2 will be explained. The development support processing achieves the development support application described above.

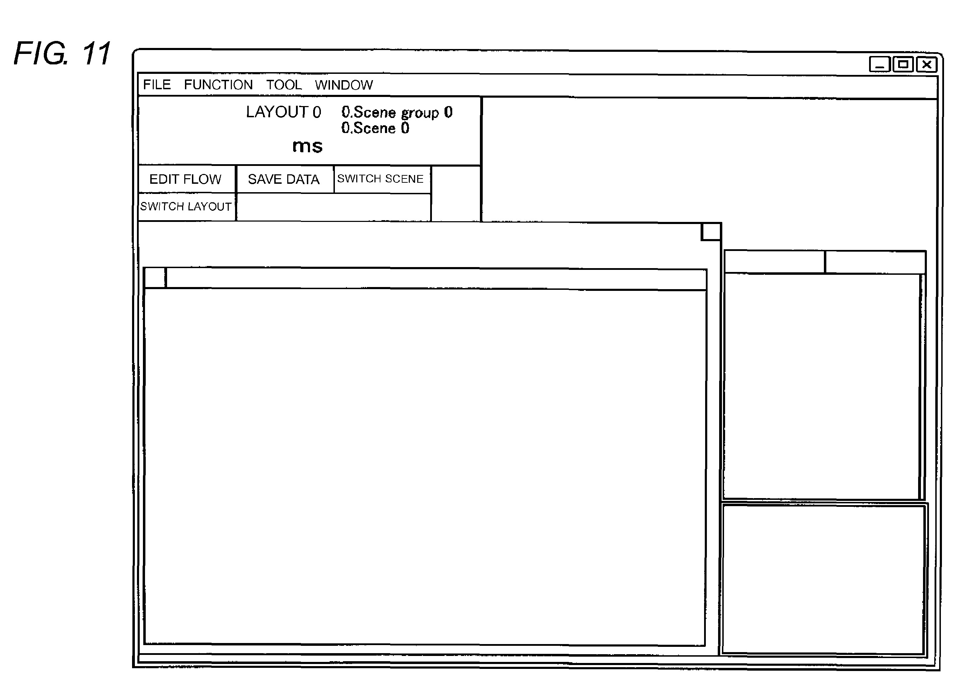

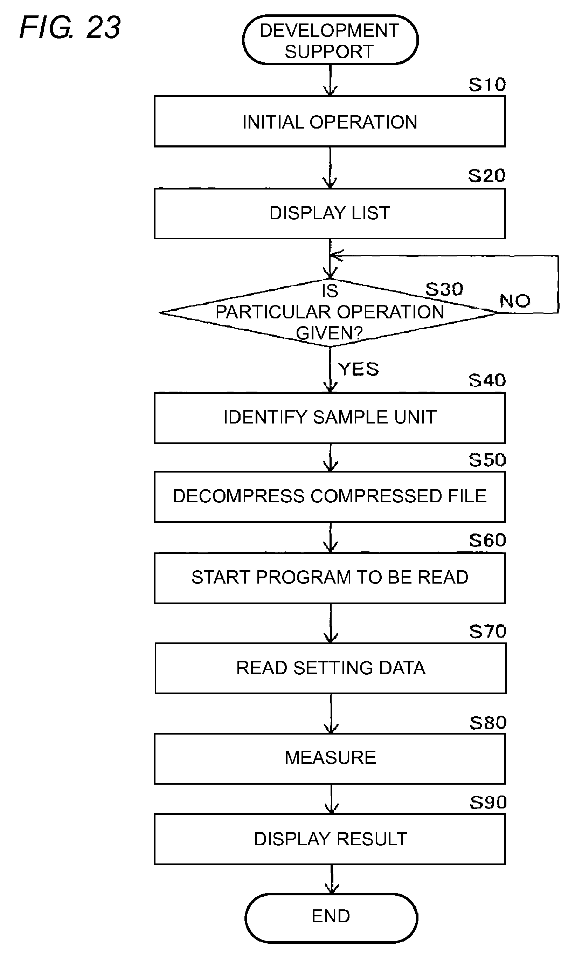

FIG. 23 is a flowchart illustrating the development support processing executed by the controller 2. As shown in FIG. 23, when the CPU 21 detects that an operation for activating the development support application is performed by means of the console 4, the CPU 21 executes an initial operation of the development support application in step S10, and proceeds to processing in step S20. In this case, the initial operation is displaying a screen of a flow not including any unit, for example. FIG. 11 illustrates an example of screen display of the monitor 3. With the initial operation, a screen such as that illustrated in FIG. 11 is displayed on the monitor 3. The initial operation includes an operation of displaying a screen such as a top page of the development support application. While the top page is displayed, a user performs an operation for displaying the list of sample units to the console 4.

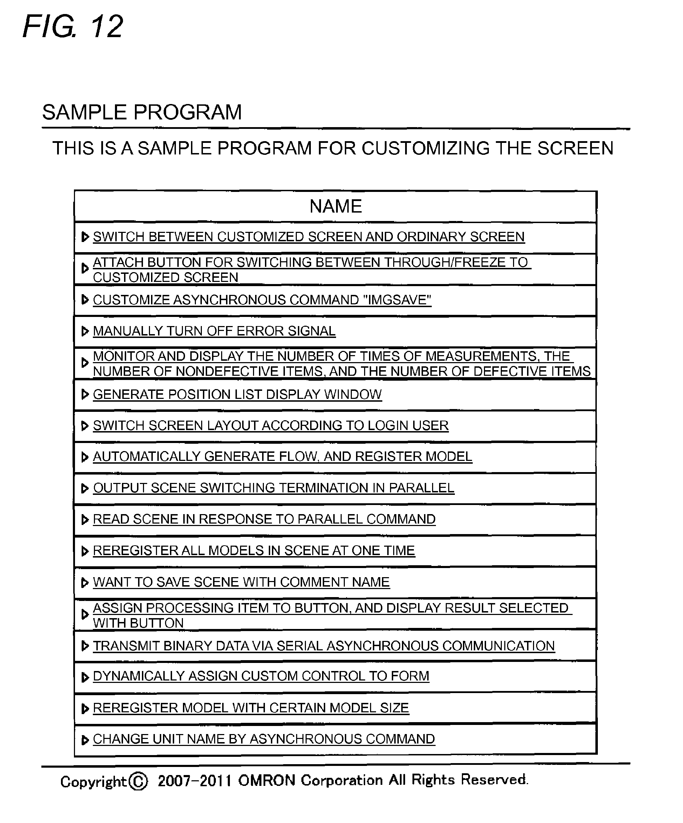

In response to the above operation, the CPU 21 displays the list of sample units. FIG. 12 illustrates an example of the screen displaying the list of sample units.

In the screen illustrated in FIG. 12, items representing purposes of the operations are listed, such as "switch between customized screen and ordinary screen", "attach a button for switching between through/freeze onto customized screen", "customize asynchronous command 'IMGSAVE"', "manually turn off error signal", and "monitor and display the number of times of measurements, the number of nondefective items, and the number of defective items". Each of the items is displayed in a selectable manner. The user refers to the purpose of each of the items, and selects one of the items on the basis of the purpose for which the user needs to generate a unit.

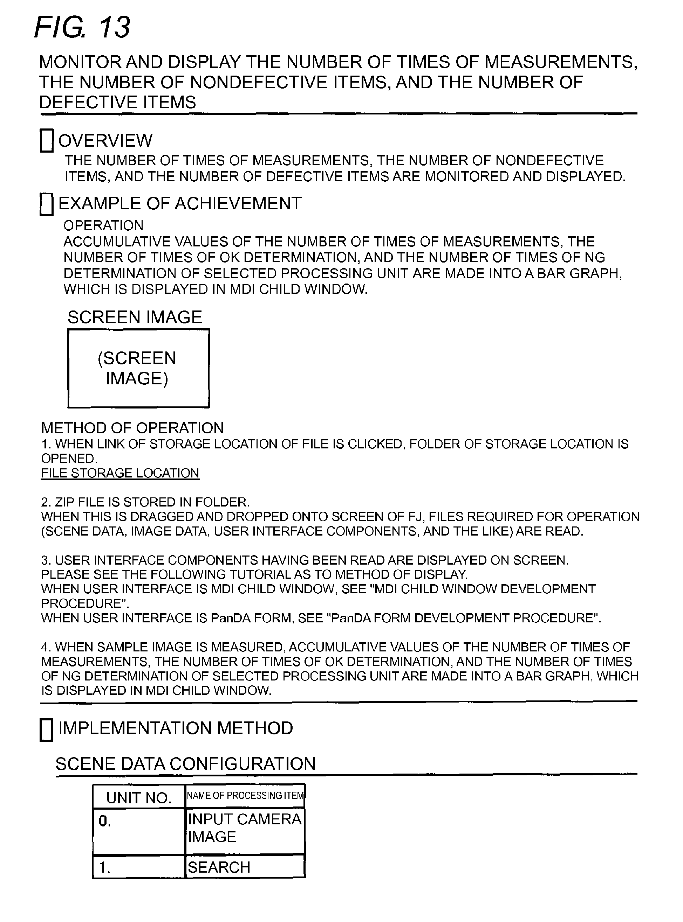

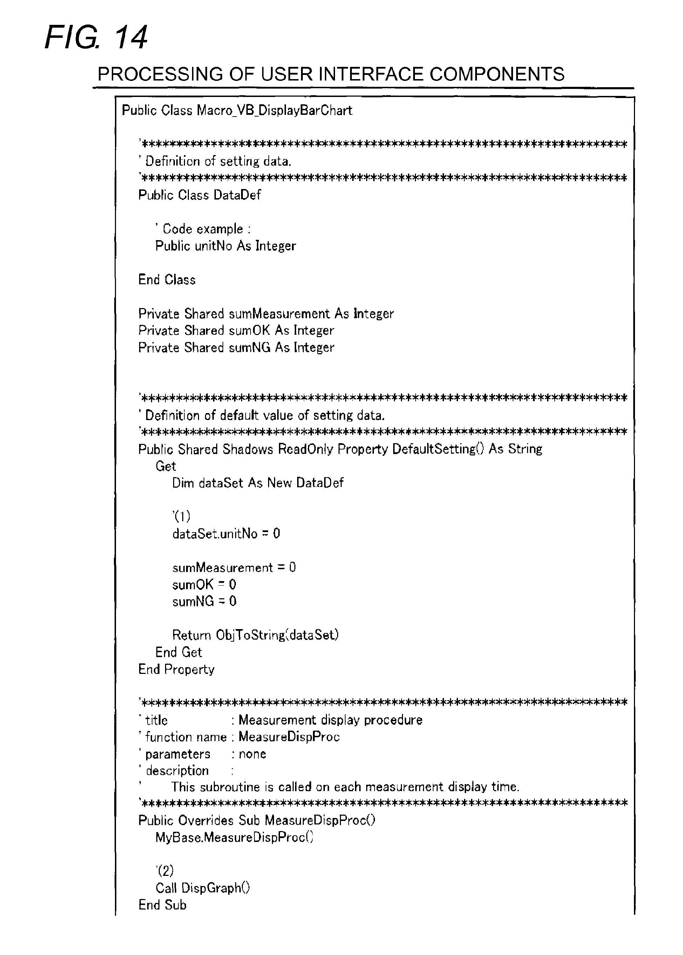

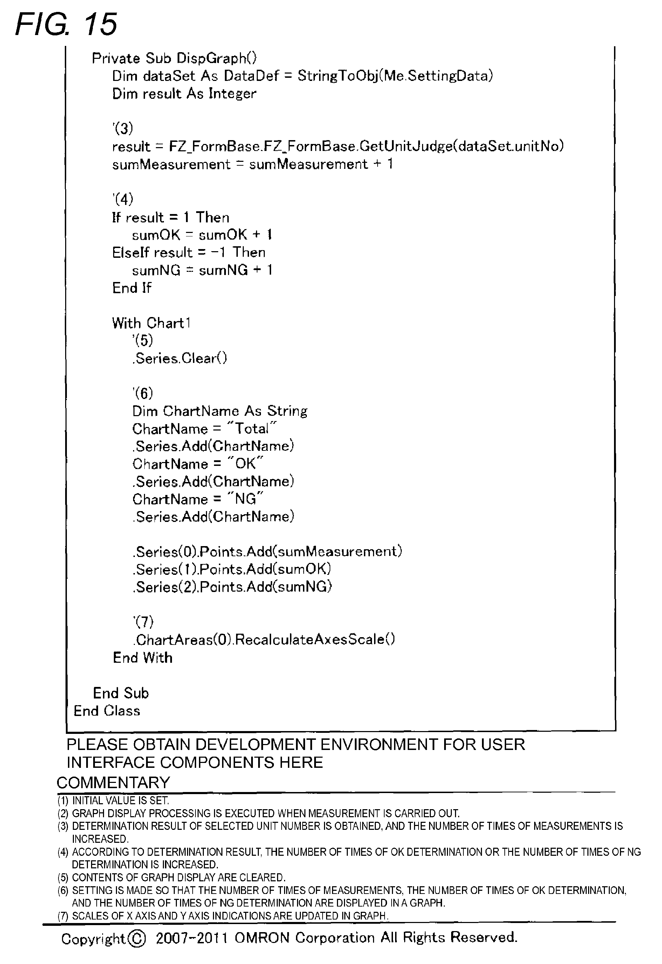

When one of the items is selected on the screen by means of the console 4, the CPU 21 displays an explanatory screen explaining the selected item. FIGS. 13 to 15 are views illustrating examples of the explanatory screen, which is displayed when "monitor and display the number of times of measurements, the number of nondefective items, and the number of defective items", which is one of the items to be displayed on the screen of FIG. 12, is selected. FIG. 14 illustrates a portion subsequent to the screen of FIG. 13, and FIG. 15 illustrates a portion subsequent to the screen of FIG. 14.

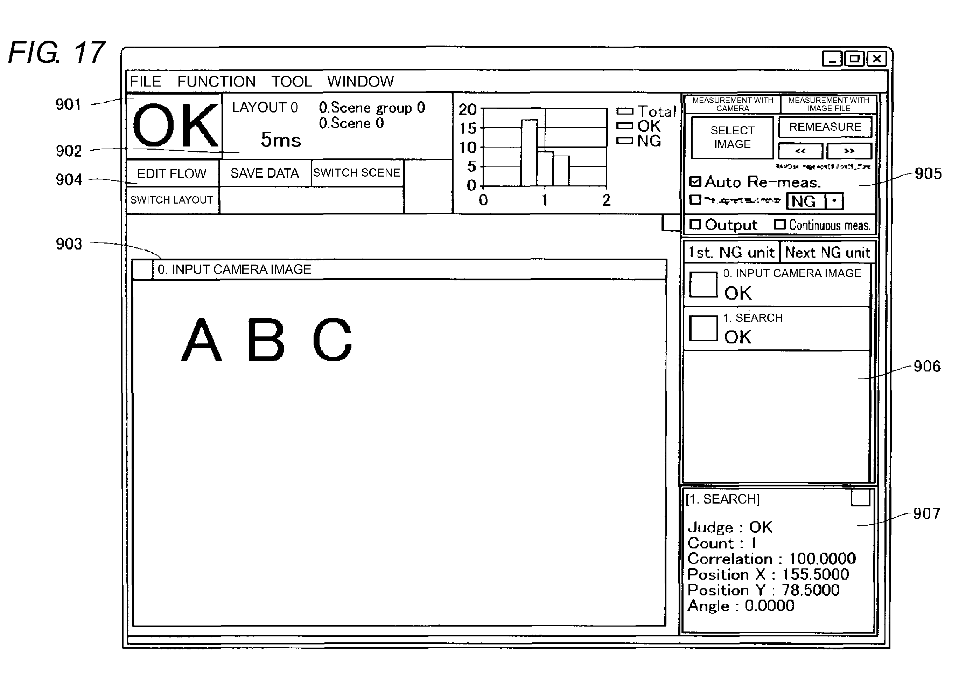

The explanatory screen shown in FIGS. 13 to 15 displays the items "overview", "example of achievement", and "implementation method", respectively. The "overview" illustrates an overview of processing executed with the sample unit corresponding to this explanatory screen. The "example of achievement" includes an explanation about the contents of the screen displayed when the sample unit is executed and an operation method for executing the sample unit. In the screen image in FIG. 13, an image of a display screen appearing when the sample unit is executed (see FIG. 17) is inserted, but has been omitted from FIG. 13. The "implementation method" is used for incorporating the function achieved with the sample unit into the image processing apparatus. The method includes a configuration of scene data required to incorporate the function and the listing of the program (processing of a user interface component). In the listing of the program as illustrated in each of FIGS. 14 and 15, the listing is specified by (1) to (7). Below the listing of the program, the explanation about the contents of the processing of each of the listings corresponding to (1) to (7) is listed as "commentary". For example, the "commentary" about the listing of (1) states "(1) initial value is set", which indicates that the portion specified by (1) in the listing of the program (dataSet.unitNo=0) corresponds to a portion for setting the initial values.

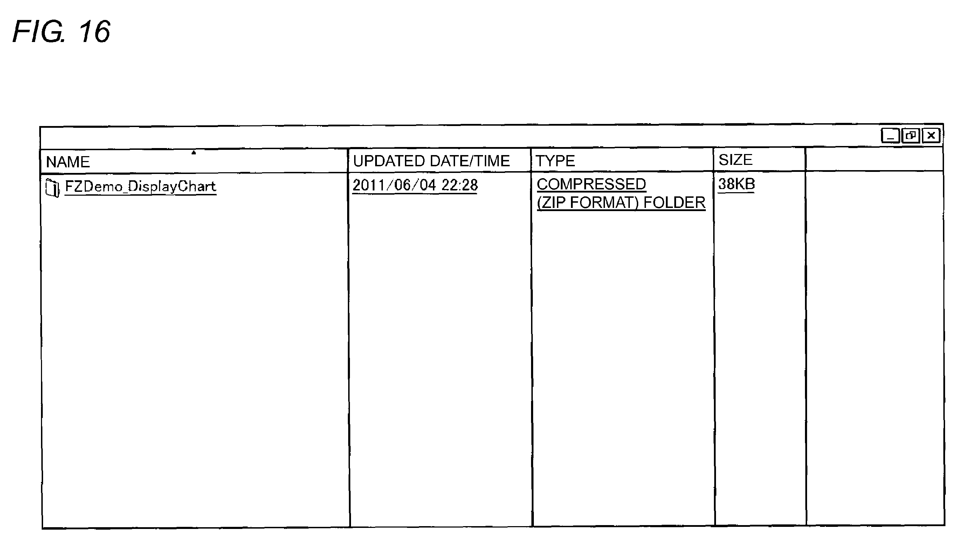

Below the field "operation method" in FIG. 13, there is the text "file storage location" which is underlined. This text is linked to a directory in which the sample unit corresponding to this explanatory screen is saved (in FIG. 8, the one corresponding to one of the "sample unit A" to the "sample unit N"). When the text "file storage location" is selected by means of the console 4, the CPU 21 displays the contents of the directory being linked. FIG. 16 is a view illustrating an example of the screen displaying the contents of such a directory.

The screen as illustrated in FIG. 16 shows a folder "FZDemo_DisplayChart" compressed in a zip format. In the present embodiment, when an image of the folder representing the storage location of the sample unit as illustrated in FIG. 16 is dragged and dropped onto a screen as illustrated in FIG. 11, the sample unit is executed.

Referring back to FIG. 8, the CPU 21 displays the list in step S20, and executes a series of processing explained with reference to FIGS. 13 to 16. Thereafter, in step S30, the CPU 21 makes a determination as to whether or not the above operation (drag and drop) is performed to the folder representing the storage location of the sample unit. When the CPU 21 determines that such an operation is performed, the CPU 21 proceeds to processing in step S40.

In step S40, the CPU 21 identifies the sample unit which is the target of the above operation, and proceeds to processing in step S50.

In step S50, the compressed file reader 203 of the CPU 21 decompresses the compressed file of the sample data of sample data of the sample unit identified in step S40 (see FIG. 9), and thereafter, the CPU 21 proceeds to processing in step S60.

In step S60, the read program start unit 201 of the CPU 21 activates the program to be read in the program decompressed in step S50, and proceeds to processing in step S70. The program to be read is an execution program for executing the processing with the sample unit.

In step S70, the setting data reader 204 of the CPU 21 reads the setting data of the sample unit identified in step S40, and thereafter proceeds to processing in step S80.

In step S80, the measurement control unit 205 of the CPU 21 executes image processing according to the sample unit (measurement operation), and proceeds to processing in step S90.

In step S90, the CPU 21 displays on the monitor 3 a result of the image processing (measurement operation) in step S80. FIG. 17 illustrates an example of the screen displaying such a result.

The screen of FIG. 17 includes a comprehensive result display window 901, an information display window 902, an image display window 903, a tool button window 904, a test measurement window 905, a flow display window 906, and a detailed result display window 907.

The image display window 903 displays an image including a character image "ABC". The image corresponds to the image data of the sample unit identified in step S40 (see FIG. 9). The above image processing is executed with the image being the target.

The flow display window 906 displays the processing units included in the sample unit (image processing module). More specifically, the flow display window 906 displays the names of two processing units, i.e., "input camera image" and "search", and also displays a measurement result (OK/NG) of each the processing units.

The comprehensive result display window 901 shows a comprehensive measurement result based on the measurement results of the respective processing units. More specifically, when the measurement results of all the processing units are OK, the comprehensive result display window 901 indicates OK. When the measurement result of at least one of the processing units is NG, the comprehensive result display window 901 indicates NG.

The information display window 902 displays information on a measurement condition and the like.
The detailed result display window 907 displays a detailed measurement result about the processing unit selected from among the processing units displayed on the flow display window 906.

The tool button window 904 displays the menus with which the flow of the sample unit is edited (e.g., setting information of the processing units and the sequence of the processing units).

The test measurement window 905 also displays an "image selection button" and a "remeasurement button".

The image selection button is manipulated to specify an image serving as the processing target of the sample unit. When this button is manipulated, the image reader 202 reads a specified image. In this case, an input image from the camera 1 can also be selected.

The remeasurement button is a button for causing the measurement control unit 205 to reexecute the image processing on the image specified at that occasion, with the sample unit being executed

When the image selection button is manipulated to specify an image different from the image data included in the sample unit (see FIG. 9) and the remeasurement button is manipulated, the measurement control unit 205 executes the image processing with the specified image being the processing target.

The screen of FIG. 17 includes various parts such as a bar graph displayed at an upper portion. The user can input information for changing the layout of the parts by means of the console 4. The setting data reader 204 receives input of this information, and changes the layout of the screen display of FIG. 17 in accordance with the input information to update the display. The setting data reader 204 saves the input information in the flash memory 22 as necessary.

In the present embodiment explained above, the user selects a desired purpose from the list display as shown in FIG. 12. Accordingly, the explanatory screen of the sample unit corresponding to the purpose is displayed (FIGS. 13 to 15). Then, when the link of the folder saving the program of the sample unit is selected, the directory including the folder is displayed (FIG. 16). When the image of the folder is dropped onto the screen displayed during the initial operation (FIG. 11), the sample unit is executed. The sample unit includes one or more image processing modules (processing units). When the sample unit is executed, processing defined by each of the processing units is executed on the image data stored as a default, for example. Then, a result of execution of the sample unit is displayed on the monitor 3 (FIG. 17).

According to the present embodiment explained above, the user can perceive the contents of the sample unit by executing the sample unit. In addition, the user can perceive the listing of the program for achieving the contents of the sample unit, by viewing the explanatory screen of the sample unit. Accordingly, the user can contemplate the difference between the image processing operation desired by the user and the image processing operation achieved with the sample program, and in order to compensate the difference therebetween, the user changes the listing of the program displayed on the explanatory screen, thereby generating a program. Therefore, the user can easily generate the listing of the program for the image processing operation desired by the user.

In the present embodiment, the particular program is executed with a portion for executing the sample unit (sample data explained with reference to FIG. 9) in each of the sample units stored as the sample data (see FIG. 8). Data for displaying the listing of the particular program on the screen is structured with a portion for displaying the explanatory screen explained with reference to FIGS. 13 to 15.

### (5) Modification and the like

In the development support processing explained above, the program according to the purpose specified by the user is executed as the sample unit. As described above, the flow information included in the setting data of the sample unit (FIG. 10) may be a program or may include a macro. Development support processing of a case where the flow information is a macro will be hereinafter explained.

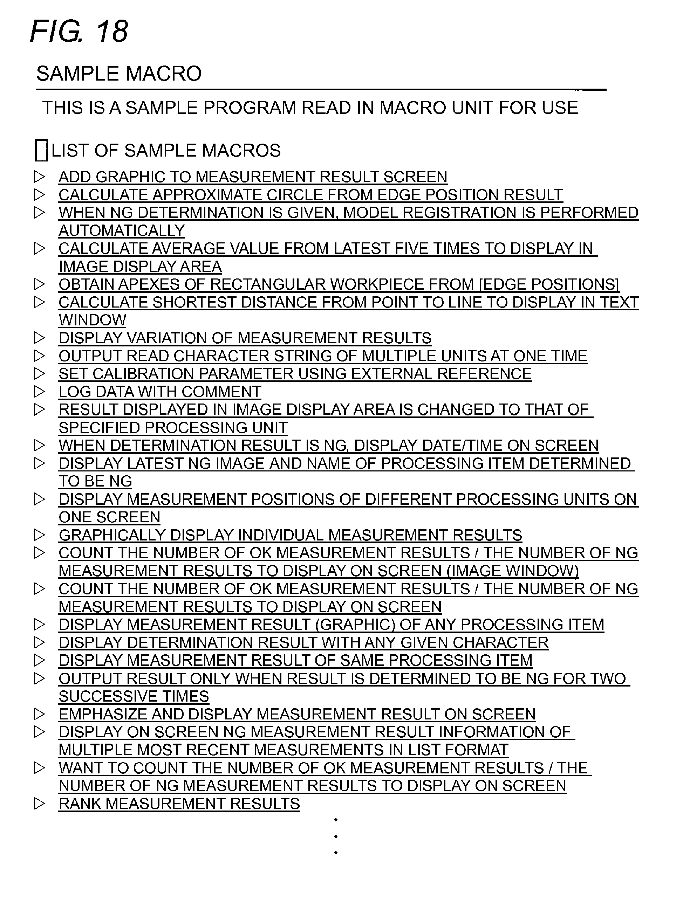

FIG. 18 is a view illustrating a modification of the list displayed in step S20 of the development support processing.

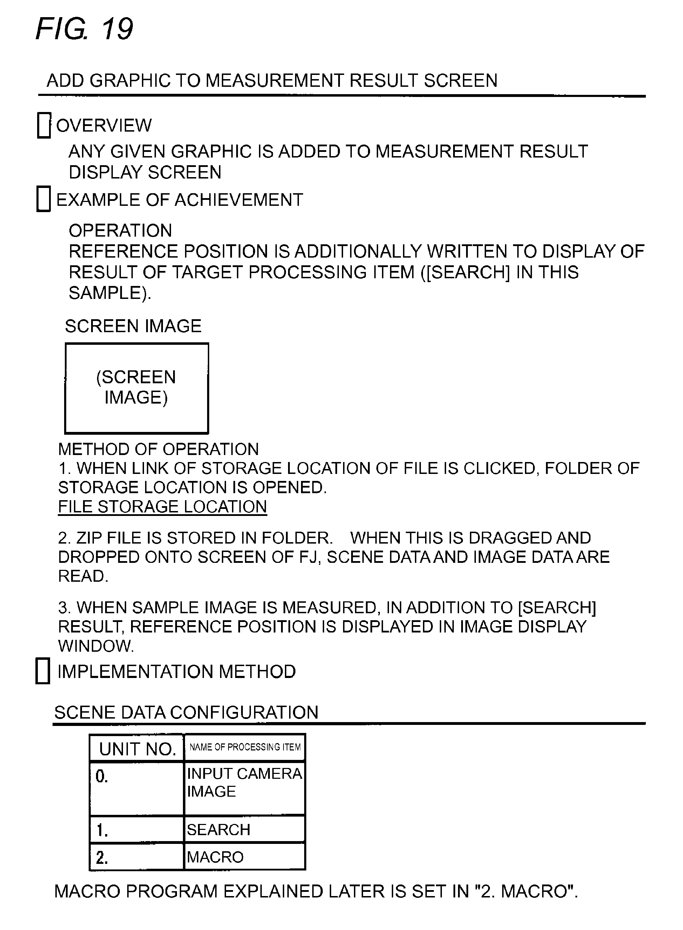

In the screen of FIG. 18, items representing purposes for which macros stored as the sample units are executed are listed, such as "add graphic to measurement result screen" and "calculate approximate circle from edge position result". When the user performs an operation of selecting one of the items by means of the console 4 (YES in step S30), the CPU 21 displays an explanatory screen of a macro corresponding to the selected purpose. FIGS. 19 to 20 illustrate examples of the display screen.

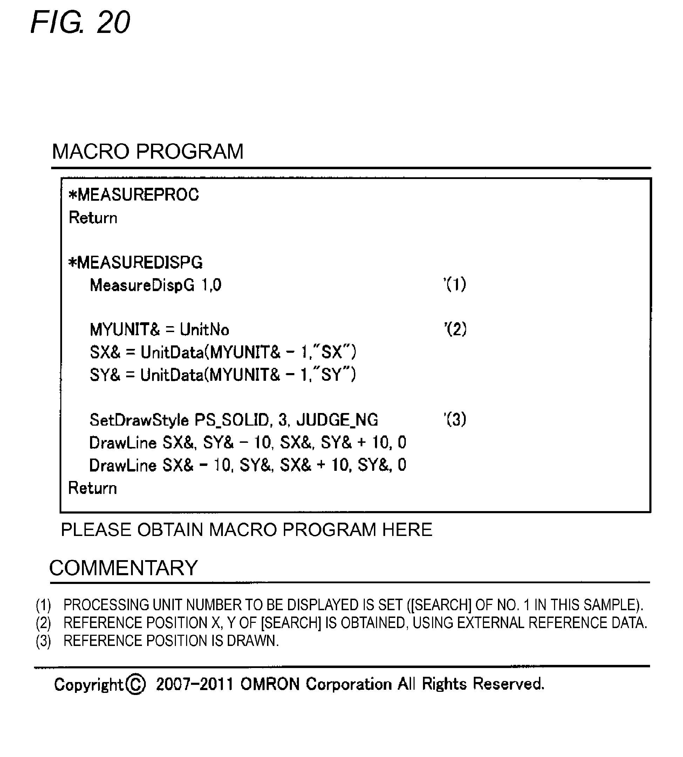

FIGS. 19 and 20 show screens which are displayed when the item "add graphic to measurement result screen" is selected in the screen of FIG. 18. It should be noted that the screen of FIG. 20 is a portion subsequent to the screen of FIG. 19.

Similarly to the explanatory screen explained with reference to FIGS. 13 to 15, this explanatory screen includes items "overview", "example of achievement", and "implementation method".

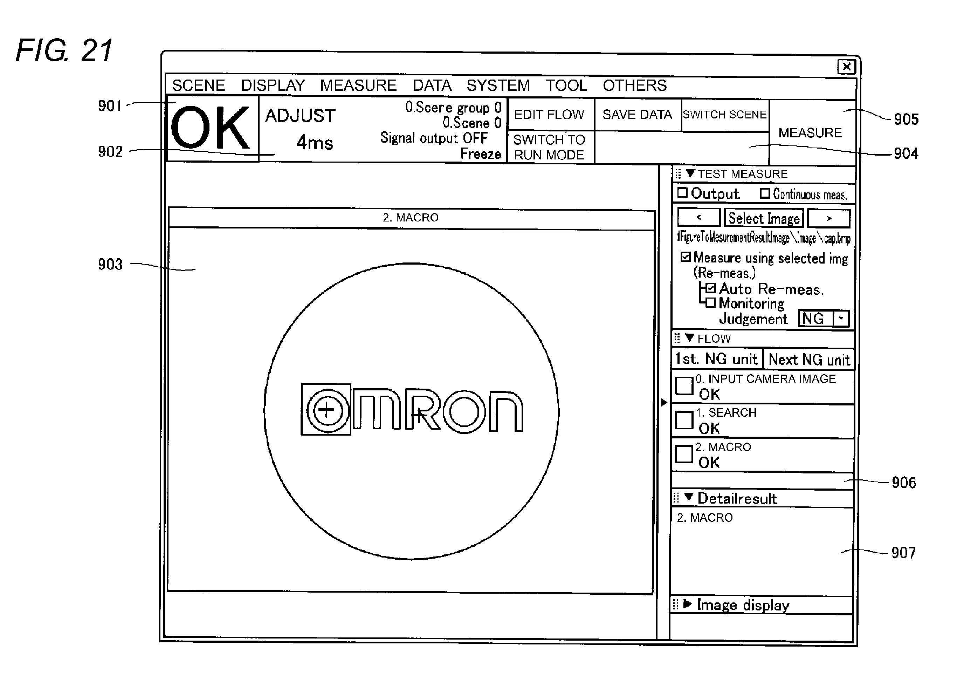

The "overview" illustrates an overview of the processing executed with the sample unit corresponding to the explanatory screen. The "example of achievement" includes an explanation about the contents of the screen displayed when the sample unit is executed and an operation method for executing the sample unit. In the screen image in FIG. 19, an image of a display screen appearing when the sample unit is executed (see FIG. 21) is inserted, while FIG. 19 does not include such a portion. The "implementation method" is used for incorporating the function achieved with the sample unit into the image processing apparatus. This method includes a configuration of scene data required to incorporate the function and a listing of a macro program. In the listing of the macro program as illustrated in FIG. 20, the listing is specified by (1) to (3). Below the listing of the macro program, an explanation about the contents of processing of each of the listings corresponding to (1) to (3) is listed as "commentary". For example, the "commentary" about the listing (1) states "(1) processing unit number to be displayed is set (in this sample, [search] of No. 1)", which means that the portion specified by (1) in the listing of the macro program of FIG. 20 (MeasureDispG_1.0) is a portion for setting a processing unit number indicating that the user desires to add a graphic to a measurement result and display the measurement result together with the graphic.

Below the field "operation method" in FIG. 19, there is the text "file storage location" which is underlined. This text is linked to a directory in which the sample unit corresponding to the explanatory screen is saved (in FIG. 8, the one corresponding to one of the "sample unit A" to the "sample unit N"). When the text "file storage location" is selected by means of the console 4, the CPU 21 displays the contents of the directory being linked.

In this directory, the sample unit including the macro program as illustrated in FIG. 20 is stored.

In the present modification, when an image of the folder representing the directory storing the macro program is dragged and dropped onto the screen as illustrated in FIG. 11, a screen representing a measurement result obtained from the execution of the corresponding sample unit is displayed similarly as explained with reference to FIG. 17. Like the screen of FIG. 17, FIG. 21 includes the comprehensive result display window 901, the information display window 902, the image display window 903, the tool button window 904, the test measurement window 905, the flow display window 906, and the detailed result display window 907.

In FIG. 21, the image display window 903 shows an image displayed when the macro is executed (rectangular image and a cross-shaped image indicating the center of the rectangular image).

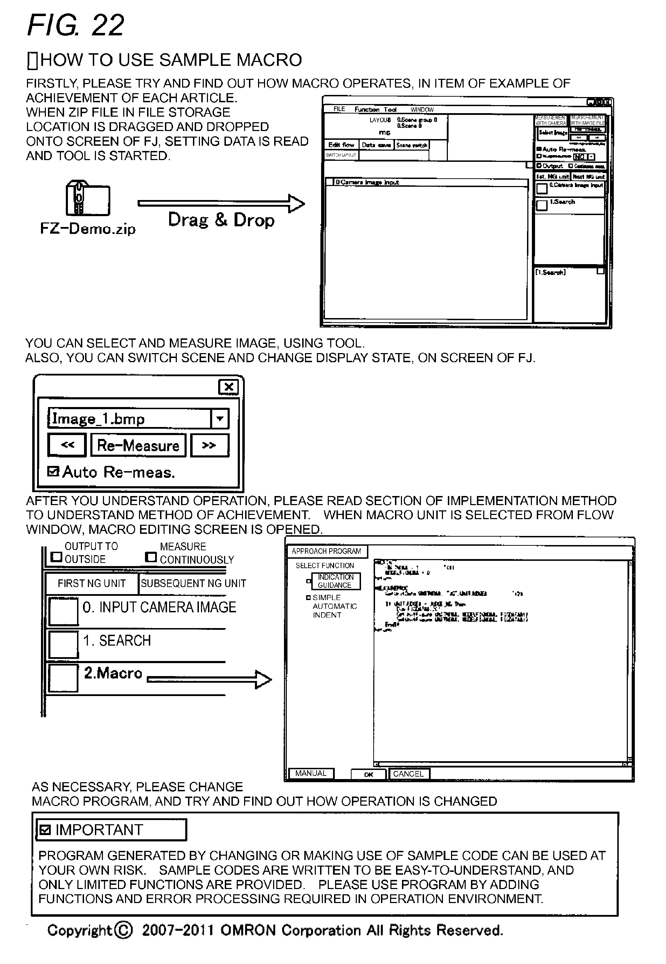

In the present modification, when an item is selected from the displayed list, an explanatory screen corresponding to the item is displayed. In the development support processing, together with the display of the list or in the initial screen and the like of the development support application, it may be possible to display a screen for explaining what kind of operation is performed on the image in the folder displayed in the directory storing the macro program of the sample unit, as illustrated in FIG. 22, so as to execute the sample unit.

According to the present modification explained above, the user can perceive the contents of the sample unit by executing the sample unit. In addition, the user can perceive the listing of the macro program for achieving the contents of the sample unit, by viewing the explanatory screen of the sample unit. Accordingly, the user can contemplate the difference between the image processing operation desired by the user and the image processing operation achieved with the macro program listed as a sample, and in order to compensate the difference therebetween, the user can use the listing of the macro program displayed on the explanatory screen to generate a macro program. Therefore, the user can easily generate the listing of the macro program for the image processing operation desired by the user.

The macro debugger 206 debugs the listing of the macro program thus generated.

It is to be understood that the embodiments and the modifications thereof disclosed herein are examples in all respects and are not restrictive. It is to be understood that the scope of the present invention is defined not by the above explanation but by the claims, and includes meanings equivalent to the claims and all the changes and variations within the scope.

The embodiments and the modifications thereof are to be carried out either independently or in appropriate combination as necessary.

### REFERENCE NUMERALS

1 ... camera, 2 ... controller, 3... monitor, 4 ... console, 5 ... sensor, 7 ... measurement target object, 22 ... flash memory, 23 ... RAM, 24 ... graphic controller, 25 ... camera interface, 26 ... input interface, 27 ... output interface, 201 ... read program start unit, 202 ... image reader, 203 ... compressed file reader, 204 ... setting data reader, 205 ... measurement control unit, 206 ... macro debugger.

## Claims

1. A development support apparatus comprising:
a storage part for storing a particular program for achieving particular image processing;
a reception part for receiving an operation from outside; and
an execution part for executing the particular program in response to the reception part receiving a particular operation; wherein
the storage part stores screen display data for displaying a listing of the particular program on a screen, and
in response to the reception part receiving the particular operation, the execution part further displays the listing of the particular program, using the screen display data.

2. The development support apparatus according to claim 1, wherein
the storage part further stores explanatory data for displaying an explanation about the particular program on the screen, and
in response to the particular operation, the execution part further displays the explanation about the particular program, using the explanatory data.

3. The development support apparatus according to claim 2, wherein
the particular operation includes:
a first operation for displaying the listing and the explanation; and
a second operation for executing the particular program.

4. The development support apparatus according to any one of claims 1 to 3, wherein the execution part receives a change of settings of the particular program, and stores the change to the storage part.

5. A development support program executed by a computer having a storage part for storing a particular program for achieving particular image processing, wherein
the storage part stores screen display data for displaying a listing of the particular program on a screen, and
the development support program causes the computer to execute the steps of:
receiving an operation from outside;
displaying the listing of the particular program, using the screen display data, in response to receiving the particular operation; and
executing the particular program.
